# EUROPEAN PATENT APPLICATION

(11) **EP 2 851 054 A1**
(43) Date of publication of application: **25.03.2015**
(21) Application number: 14182291.6
(22) Date of filing: 26.08.2014
(51) Int. Cl.: A61H 3/04, B62B 5/00

(54) **Walking assistance moving vehicle**

(30) Priority: 30.08.2013 JP 2013180602
(71) Applicant: Funai Electric Co., Ltd., Osaka 574-0013 (JP)
(72) Inventor: Tanaka, Hideyuki, Daito-shi, Osaka 574-0013 (JP)
(74) Representative: Global IP Europe Patentanwaltskanzlei

(57) **Abstract**

A walking assistance (18) moving vehicle includes a walking assistance moving vehicle main body with wheels (13,14), a distance sensor (15), an inclination sensor (17), and a controller (24). The distance sensor (15) senses distance between the walking assistance moving vehicle main body and an object ahead of the walking assistance moving vehicle main body. The inclination sensor (17) senses inclination of the walking assistance moving vehicle main body. The controller (24) distinguishes between a first state in which the walking assistance moving vehicle moves on a sloped ground and a second state in which at least one of the wheels is off a ground based on the distance sensed by the distance sensor and the inclination sensed by the inclination sensor. The controller further controls the walking assistance (18) moving vehicle main body according to a result of distinguishing between the first state and the second state.

## Description

### CROSS-REFERENCE TO RELATED APPLICATIONS

This application claims priority to Japanese Patent Application No. 2013-180602 filed on August 30, 2013. The entire disclosure of Japanese Patent Application No. 2013-180602 is hereby incorporated herein by reference.

### BACKGROUND

### Field of the Invention

The present invention generally relates to a walking assistance moving vehicle. More specifically, the present invention relates to a walking assistance moving vehicle with a drive wheel that assist walking of a user.

### Background Information

A walking assistance moving vehicle with drive wheels that assist the walking of a user is known in the art (see Japanese Unexamined Patent Application Publication No. H10-338142 (Patent Literature 1), for example).

The above-mentioned Patent Literature 1 discloses a drive-assisted small vehicle having a motor controller that causes an electric motor linked to the drive wheels to generate an assist drive force according the magnitude and direction of input force applied by the operator (user), and a distance sensor that is attached to the small vehicle and senses when the wheels are not touching the ground. This drive-assisted small vehicle is configured so that the distance sensor detects a state in which the wheels are suspended above the ground. When a wheel suspended state is detected, all of the assist drive force is switched off by the motor controller.

### SUMMARY

However, with the drive-assisted small vehicle discussed in Patent Literature 1, the distance sensor can detect when the wheels are not on the ground. However it has been discovered that a problem with this distance sensor is that a distance change due to a change in the ground over which the vehicle is moving from flat to a sloped path (such as a hill) may be falsely detected as a wheel suspended state.

This invention is conceived in light of the above-mentioned problem. One object is to provide a walking assistance moving vehicle with which a state in which the vehicle is moving over sloped ground is identified in addition to a state in which the wheels are not touching the ground, regardless of a change in the ground. Another object is to provide a walking assistance moving vehicle with which proper control can be performed according to the identified state.

In view of the state of the known technology, a walking assistance moving vehicle includes a walking assistance moving vehicle main body with wheels, a distance sensor, an inclination sensor, and a controller. The walking assistance moving vehicle main body is configured to assist walking of a user. The distance sensor is configured to sense distance between the walking assistance moving vehicle main body and an object ahead of the walking assistance moving vehicle main body. The inclination sensor is configured to sense inclination of the walking assistance moving vehicle main body. The controller is configured to distinguish between a first state in which the walking assistance moving vehicle moves on a sloped ground and a second state in which at least one of the wheels is off a ground based on the distance sensed by the distance sensor and the inclination sensed by the inclination sensor. The controller is further configured to control the walking assistance moving vehicle main body according to a result of distinguishing between the first state and the second state.

Also other objects, features, aspects and advantages of the present disclosure will become apparent to those skilled in the art from the following detailed description, which, taken in conjunction with the annexed drawings, discloses one embodiment of the walking assistance moving vehicle.

### BRIEF DESCRIPTION OF THE DRAWINGS

Referring now to the attached drawings which form a part of this original disclosure:
FIG. 1 is a schematic diagram illustrating a walking assistance moving vehicle in accordance with a first embodiment;
FIG. 2 is a block diagram of the configuration of the walking assistance moving vehicle in accordance with the first embodiment;
FIG. 3 is a schematic diagram illustrating a state in which the walking assistance moving vehicle in accordance with the first embodiment is going over a step;
FIG. 4 is a schematic diagram illustrating a state in which the walking assistance moving vehicle in accordance with the first embodiment has encountered an uphill;
FIG. 5 is a schematic diagram illustrating a state in which the walking assistance moving vehicle in accordance with the first embodiment is starting to go uphill;
FIG. 6 is a schematic diagram illustrating a state in which the walking assistance moving vehicle in accordance with the first embodiment has encountered a downhill;
FIG. 7 is a schematic diagram illustrating a state in which rear wheels of the walking assistance moving vehicle in accordance with the first embodiment are off the ground;
FIG. 8 is a schematic diagram illustrating a state in which the walking assistance moving vehicle in accordance with the first embodiment is starting to go downhill;
FIG. 9 is a schematic diagram illustrating a state in which the walking assistance moving vehicle in accordance with the first embodiment has detected a concave obstacle;
FIG. 10 is a schematic diagram illustrating a state in which the walking assistance moving vehicle in accordance with the first embodiment has detected a convex obstacle;
FIG. 11 is a schematic diagram illustrating a state in which the walking assistance moving vehicle in accordance with the first embodiment is moving uphill on a substantially flat path;
FIG. 12 is a schematic diagram illustrating a state in which the walking assistance moving vehicle in accordance with the first embodiment is moving downhill on a substantially flat path;
FIG. 13 is a flowchart showing processing for determining operating mode of the walking assistance moving vehicle in accordance with the first embodiment;
FIG. 14 is a flowchart showing processing for executing the operating mode of the walking assistance moving vehicle in accordance with the first embodiment;
FIG. 15 is a flowchart showing processing when the walking assistance moving vehicle in accordance with a second embodiment moves over a step; and
FIG. 16 is a flowchart showing processing when the walking assistance moving vehicle in accordance with a third embodiment moves over a step.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents.

### FIRST EMBODIMENT

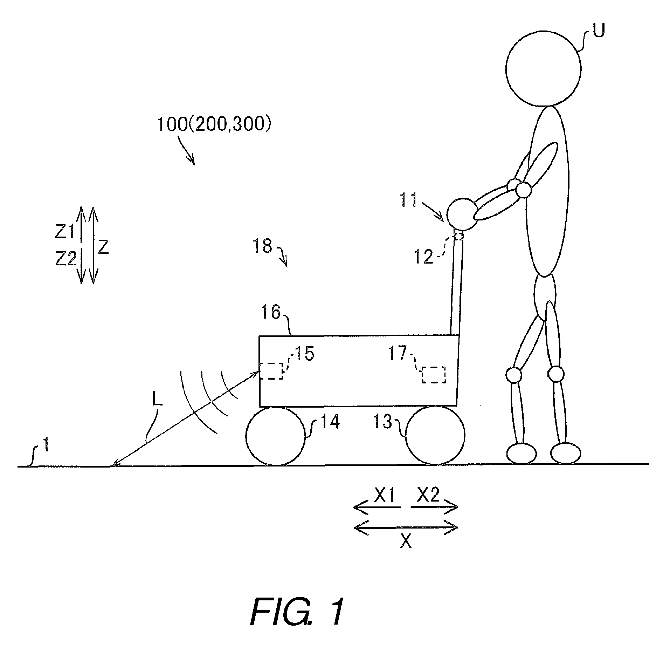

Referring to FIGS. 1 to 14, a walking assistance moving vehicle 100 is illustrated in accordance with a first embodiment.

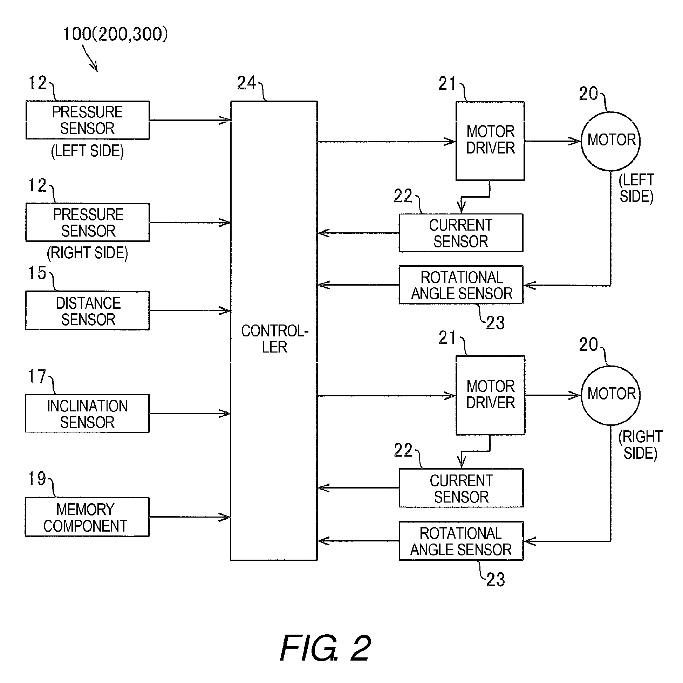

As shown in FIG. 1, the walking assistance moving vehicle 100 in accordance with the first embodiment includes a grip component 11, a pressure sensor 12, a pair of left and right drive wheels 13, a pair of free wheels 14, a distance sensor 15, a bed 16, and an inclination sensor 17. The grip component 11 is gripped by a user U. The pressure sensor 12 senses an input force P applied to the grip component 11. The drive wheels 13 are driven by drive motors 20 (discussed below; see FIG. 2). The free wheels 14 passively rotate due to the drive of the drive wheels 13. The distance sensor 15 senses the distance to an object ahead of (on the X1 direction side of) the walking assistance moving vehicle 100. Various kinds of cargo can be loaded on the bed 16. The inclination sensor 17 senses the inclination (inclination angle) of the walking assistance moving vehicle 100 relative to the vertical direction (Z direction). The grip component 11, the drive wheels 13, the free wheels 14, and the bed 16 form a walking assistance moving vehicle main body 18. The pressure sensor 12 is an example of the "pressure sensor" of the present invention. The drive wheels 13 and the free wheels 14 are examples of the "wheels" of the present invention. The distance sensor 15 is an example of the "distance sensor" of the present invention.

In the illustrated embodiment, the walking assistance moving vehicle 100 is a manually propulsion vehicle, such as a hand cart, a walking assist cart, a wheeled walker or a rollator, that serves both to assist the user (primarily an elderly person with limited mobility) and to function as a chair for resting on and a basket for carrying things. However, the present invention can also be equally applied to strollers, push or pull carts, wheeled walkers, wheeled canes, wheelchairs, and so forth. Also, the walking assistance moving vehicle 100 is basically a manually propelled device that is pushed or pulled by a person, and also include the drive motors 20. However, the walking assistance moving vehicle 100 can include other type of a prime mover, such as an engine. Furthermore, in the illustrated embodiment, the walking assistance moving vehicle 100 basically is a wheeled vehicle with at least one wheel. However, the walking assistance moving vehicle 100 can be other types of vehicles, such as tracked vehicles and so forth.

In the illustrated embodiment, as shown in FIG. 1, the X direction indicates the longitudinal direction of the walking assistance moving vehicle 100 on the flat ground 1. In other words, the X direction indicates the horizontal direction. Furthermore, the X1 direction indicates the forward direction along the X direction, while the X2 direction indicates the forward direction along the X direction. Thus, in the illustrated embodiment, the movement of the walking assistance moving vehicle 100 in the X1 direction is referred as a forward movement, while the movement of the walking assistance moving vehicle 100 in the X2 direction is refereed as a rearward movement. Similarly, the walking of the user U in the X1 direction is also referred as a forward walking of the user U, while the walking of the user U in the X2 direction is also refereed as a rearward walking of the user U. Also, in the illustrated embodiment, the Z direction indicates the vertical direction of the walking assistance moving vehicle 100. Furthermore, the Z1 direction indicates the vertically upward direction, while the Z2 direction indicates the vertically downward direction.

As shown in FIG. 2, the walking assistance moving vehicle 100 further includes a memory component 19, a pair of drive motors 20, a pair of motor drivers 21, a pair of current sensors 22, a pair of rotational angle sensors 23, and a controller 24.

The pressure sensor 12 senses the input force P exerted by the user U on the grip component 11 (see FIG. 1). The pressure sensor 12 also senses the magnitude and direction of the input force P exerted by the user U. The pressure sensor 12 also individually senses the input forces P exerted by the left and right hands of the user U. The pressure sensor 12 also outputs the sensing result to the controller 24. The controller 24 performs control to vary the drive direction (rotation direction) and the magnitude of drive force of the drive motors 20 based on information about the input force P sensed by the pressure sensor 12. Any kind of pressure sensor may be used as the pressure sensor 12, but examples include pressure sensors that make use of load cells, strain gauges, piezoelectric elements, pressure-sensitive electroconductive rubber, electrostatic capacitance gauges, and so forth.

The distance sensor 15 senses the distance L (see FIG. 1) between the walking assistance moving vehicle 100 and an object ahead of (on the X1 direction side of) the walking assistance moving vehicle 100. The term "object" here refers, for example, to level ground (substantially flat ground), sloped ground, a concave or convex obstacle, or the like. In FIG. 1 a state is shown in which the distance sensor 15 is sensing the distance L between the walking assistance moving vehicle 100 and the flat ground ahead of the walking assistance moving vehicle 100. The distance sensor 15 outputs the sensed distance L to the controller 24. Any kind of distance sensor may be used for the distance sensor 15, but examples include distance sensors that make use of ultrasonic waves, infrared light, cameras, laser range finders, and so forth. More specifically, in the illustrated embodiment, as shown in FIG. 1, the distance sensor 15 forwardly and downwardly emits a beam of ultrasonic waves, infrared light and the like, to the ground 1 and receives the return beam from the ground 1 (a direction of the beam is indicated with an arrow from distance sensor 15 in FIG. 1), thereby sensing the distance L from the distance sensor 15 to the ground 1 in a conventional manner. In the illustrated embodiment, the distance L indicates the distance from the distance sensor 15 to a reflection point of the beam on the ground 1 along the direction of the beam.

The inclination sensor 17 senses the acceleration A of the walking assistance moving vehicle 100 in the longitudinal direction (X direction) of the walking assistance moving vehicle 100. The acceleration A here is sensed as a negative value when the inclination sensor 17 is displaced rearward (to the X2 direction side), and is sensed as a positive value when the inclination sensor 17 is displaced forward (to the X1 direction side). The inclination sensor 17 also outputs the sensed acceleration A to the controller 24. The controller 24 calculates the inclination of the walking assistance moving vehicle 100 based on information about the acquired acceleration A. That is, the inclination sensor 17 senses information related to inclination. The inclination sensing mechanism made up of the inclination sensor 17 and the controller 24 is an example of the "inclination sensor" of the present invention.

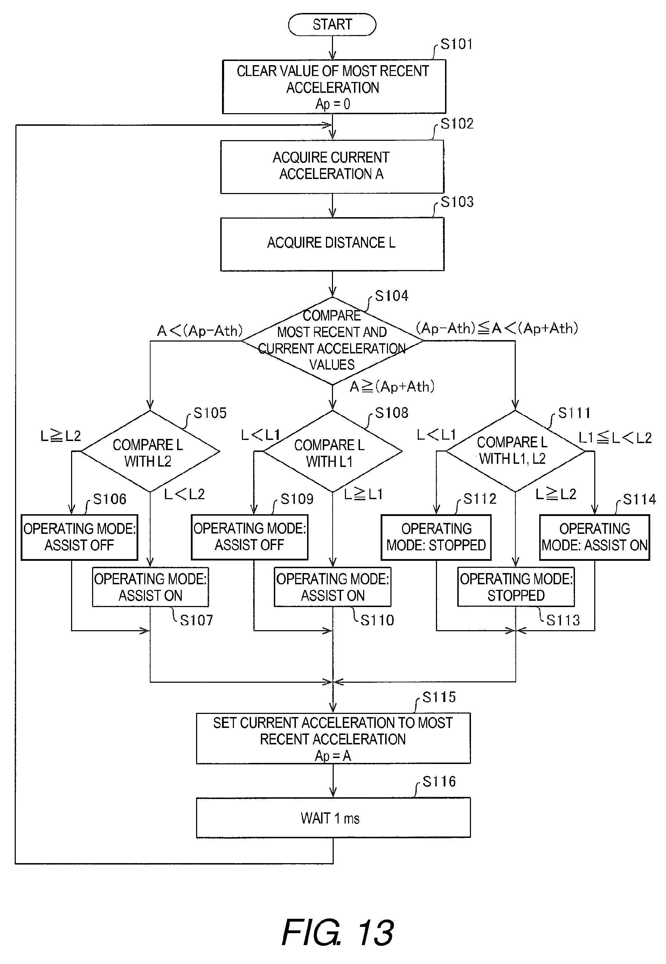

The memory component 19 stores various kinds of data (such as the distance L, the acceleration A, and distance thresholds), programs, and so forth. The "distance thresholds" here are values compared with the distance L sensed by the distance sensor 15, and are combined with inclination information produced by the inclination sensor 17 and set in order to determine the operating mode of the walking assistance moving vehicle 100 (discussed below; see FIG. 13). The distance thresholds include a lower limit distance threshold L1 and an upper limit distance threshold L2. The distance thresholds L1 and L2 used for determining the operating mode can be an L1 of approximately 35 cm and an L2 of approximately 90 cm when the distance sensor 15 senses a distance L of 60 cm in a state of moving over level ground (see FIG. 1), for example. These numerical values are just examples of distance thresholds, and are not intended to limit the distance thresholds of the present invention.

The drive motors 20 are linked to the drive wheels 13, respectively, and drive the drive wheels 13, respectively.

The motor drivers 21 are connected to the drive motors 20, respectively. The motor drivers 21 also send current values I to the drive motors 20 based on a setting of the current values I from the controller 24, respectively. Consequently, the walking assistance moving vehicle 100 is configured so that the drive wheels 13 linked to the drive motors 20 assist the walking of the user U.

The current sensors 22 sense the current values I of the motor drivers 21, respectively. The current sensors 22 also output the sensed current values I to the controller 24. The controller 24 calculate the torque values imparted by the drive motors 20 to the drive wheels 13 based on information about the acquired current values I.

The rotational angle sensors 23 sense the rotational angles of the drive motors 20, respectively. The rotational angle sensors 23 also output the sensed rotational angles to the controller 24. The controller 24 calculates the rotational speed of the drive wheels 13 based on information about the acquired rotational angles, and calculates the movement speed of the walking assistance moving vehicle 100 based on the rotational speed and the circumference or perimeter of the drive wheels 13. That is, the rotational angle sensors 23 sense information related to speed. Any kind of rotational angle sensor may be used for the rotational angle sensors 23, but examples include Hall sensors, resolvers, rotary encoders, and other such rotational angle sensors.

The controller 24 controls the various constituent elements of the walking assistance moving vehicle 100. The controller 24 also identifies the state of the walking assistance moving vehicle 100 based on the distance L sensed by the distance sensor 15 and the inclination sensed by the inclination sensor 17. The controller 24 also performs control to switch the operating mode of the walking assistance moving vehicle 100 according to the identified state of the walking assistance moving vehicle 100.

In the illustrated embodiment, the controller 24 includes a microprocessor or a microcomputer with a control program that controls various components of the walking assistance moving vehicle 100. The controller 24 can also include other conventional components such as an input interface circuit, an output interface circuit, and storage devices such as a ROM (Read Only Memory) device and a RAM (Random Access Memory) device. The microcomputer of the controller 24 is programmed to control the various components of the walking assistance moving vehicle 100. The memory circuit stores processing results and control programs that are run by the microcomputer. The internal RAM of the controller 24 stores statuses of operational flags and various control data. The internal ROM of the controller 24 stores the programs for various operations. The controller 24 is capable of selectively controlling any of the components of the walking assistance moving vehicle 100 in accordance with the control program. It will be apparent to those skilled in the art from this disclosure that the precise structure and algorithms for the controller 24 can be any combination of hardware and software that will carry out the functions of the present invention.

The operation for assisting the forward (to the X1 direction side) walking of the user U with the walking assistance moving vehicle 100 will now be described through reference to FIGS. 1 and 2.

As shown in FIG. 1, the user U grips the grip component 11 of the walking assistance moving vehicle 100 with both hands and starts moving forward. The walking assistance moving vehicle 100 uses the pressure sensor 12 to sense the forward input force P produced as the user U walks forward. The walking assistance moving vehicle 100 then controls the drive motors 20 (see FIG. 2) via the motor drivers 21 (see FIG. 2) based on the forward input force P exerted by the user U. More specifically, the walking assistance moving vehicle 100 generates the drive force at the drive motors 20, which results in forward movement. The amount of the drive force here is proportional to the amount of input force P exerted by the user U (the force at which the walking assistance moving vehicle 100 is pushed forward). When the drive wheels 13 linked to the drive motors 20 are rotated, the walking assistance moving vehicle 100 begins to move forward. This gives the user U a walking assist through the drive force of the drive motors 20 installed in the walking assistance moving vehicle 100. An operation of assisting the forward walking of the user U is described here, but the same applies to the operation of assisting rearward walking. The walking assistance moving vehicle 100 also turn to the left or right, which the user U accomplishes by moving the grip component 11 to the left or right.

Next, the identification of the state of the walking assistance moving vehicle 100 by the controller 24 based on the distance L sensed by the distance sensor 15, the inclination sensed by the inclination sensor 17, and the amount of change (e.g., the change amount) in inclination will now be described through reference to FIGS. 1 to 12. The switching of the operating mode of the walking assistance moving vehicle 100 in each identification will also be described.

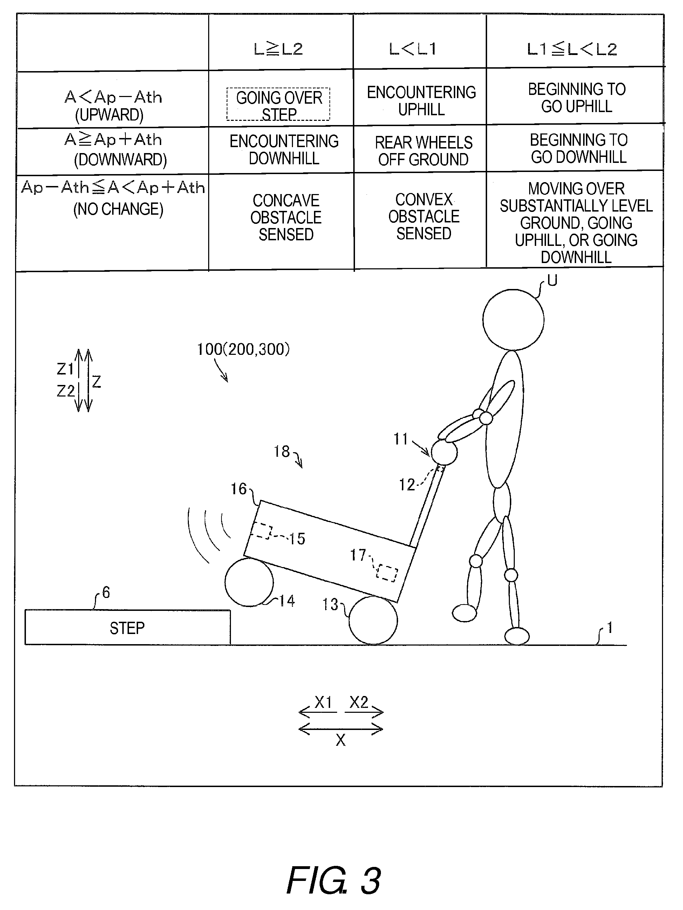

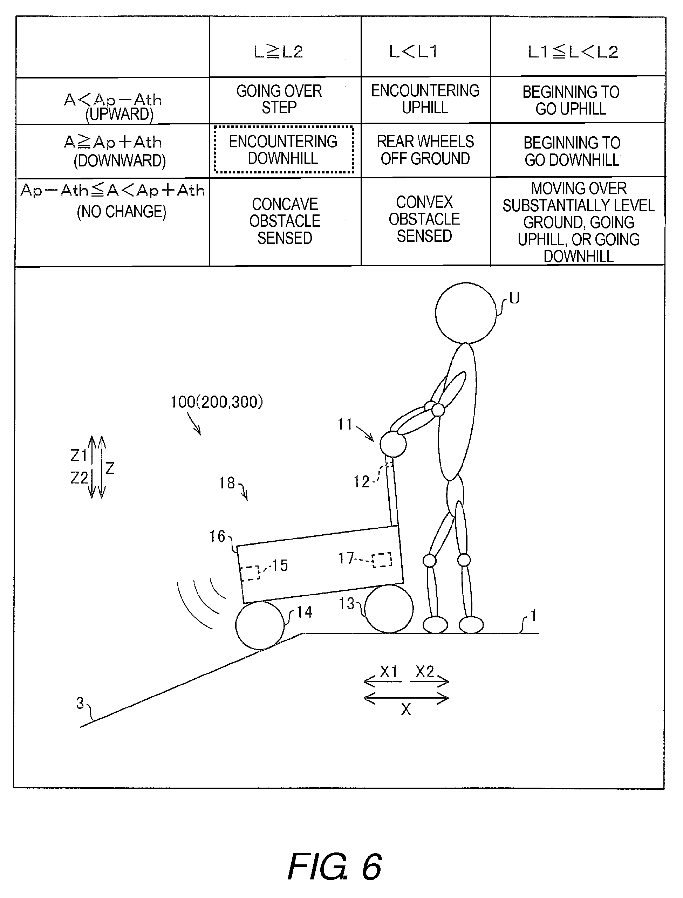

Here, the amount of change in inclination is the difference between the current acceleration A sensed by the inclination sensor 17 and the most recent acceleration Ap sensed most recently. In particular, the controller 24 determines the change in inclination by comparing the difference between the current acceleration A and the most recent acceleration Ap sensed most recently with an acceleration threshold Ath. More specifically, the controller 24 determines that there has been an upward change (in the Z1 direction) if the current acceleration A is less than the difference between the most recent acceleration Ap and the acceleration threshold Ath. For example, if there has been displacement from the state in FIG. 1 to the state in FIG. 3, the inclination sensor 17 of the walking assistance moving vehicle 100 is displaced rearward (to the X2 direction side). That is, the controller 24 determines that the inclination has changed upward based on the rearward displacement of the inclination sensor 17. The controller 24 also determines that the change is downward (in the Z2 direction) if the current acceleration A is above the sum of the most recent acceleration Ap and the acceleration threshold Ath. For example, if there is displacement from the state in FIG. 1 to the state in FIG. 6, the inclination sensor 17 of the walking assistance moving vehicle 100 is displaced forward (to the X1 direction side). That is, the controller 24 determines that the inclination has changed downward based on the forward displacement of the inclination sensor 17. Otherwise, it is determined that there is no change in inclination.

First, as shown in FIG. 3, a state in which the walking assistance moving vehicle 100 is going over a step 6 will be described. In this state of going over the step 6, the walking assistance moving vehicle 100 is such that the drive wheels 13 provided at the rear (the X2 direction side) are touching the ground 1, and the free wheels 14 at the front (the X1 direction side) are not touching the ground 1. In this case, the distance sensor 15 on the front side (the X1 direction side) of the walking assistance moving vehicle 100 senses the distance L that is further ahead than when moving over the flat ground (see FIG. 1). Accordingly, when going over the step 6, the distance L is sensed that is greater than the upper limit distance threshold L2. As shown in FIG. 3, the inclination sensor 17 also senses a change in upward inclination of the walking assistance moving vehicle 100. The controller 24 determines that the walking assistance moving vehicle 100 is going over the step 6 based on the sensing result of the various sensors mentioned above. If it is determined that the vehicle is going over the step 6, then the operating mode of the walking assistance moving vehicle 100 is switched to assist off mode in which the user U is not assisted by the controller 24. The state of going over the step 6 is an example of the "second state in which at least one of the wheels is off the ground" of the present invention.

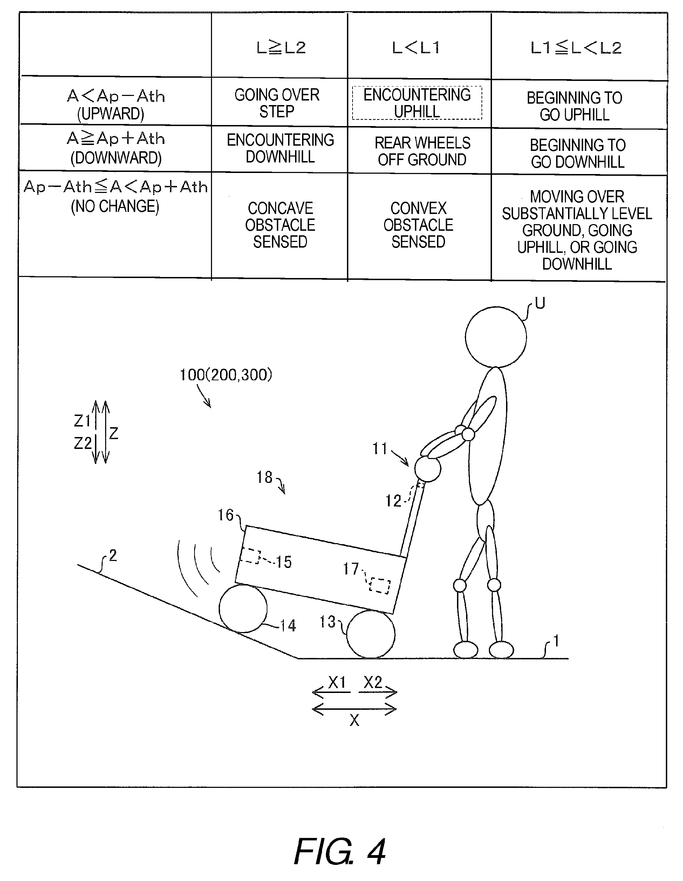

As shown in FIG. 4, a state in which the walking assistance moving vehicle 100 has encountered an uphill 2 will now be described. In this state, the walking assistance moving vehicle 100 is such that the drive wheels 13 at the rear (on the X2 direction side) are touching the ground 1, and the free wheels 14 at the front (on the X1 direction side) are touching the first rise of the uphill 2. In this case, the distance sensor 15 on the front side (the X1 direction side) of the walking assistance moving vehicle 100 senses the distance L that is closer (more to the X2 direction side) than when moving over the flat ground (see FIG. 1). Accordingly, when the uphill 2 is first encountered, the distance L is sensed that is less than the lower limit distance threshold L1. With the case shown in FIG. 4, the inclination sensor 17 senses a change in upward inclination of the walking assistance moving vehicle 100. The controller 24 determines that the walking assistance moving vehicle 100 has encountered the uphill 2 based on the sensing results of the various sensors mentioned above. When it is determined that the uphill 2 has been encountered, the controller 24 switches the operating mode of the walking assistance moving vehicle 100 to the assist on mode in which the user U is assisted. Specifically, in this assist on mode, the control is performed to increase the assist force according to how far up the uphill 2 is (the extent of change in the inclination of the walking assistance moving vehicle 100). This encounter with the uphill 2 is an example of the "first state in which the walking assistance moving vehicle moves on the sloped ground" of the present invention. Also, this encounter with the uphill 2 is an example of the "transient state in which the walking assistance moving vehicle is beginning to move on the sloped ground" of the present invention.

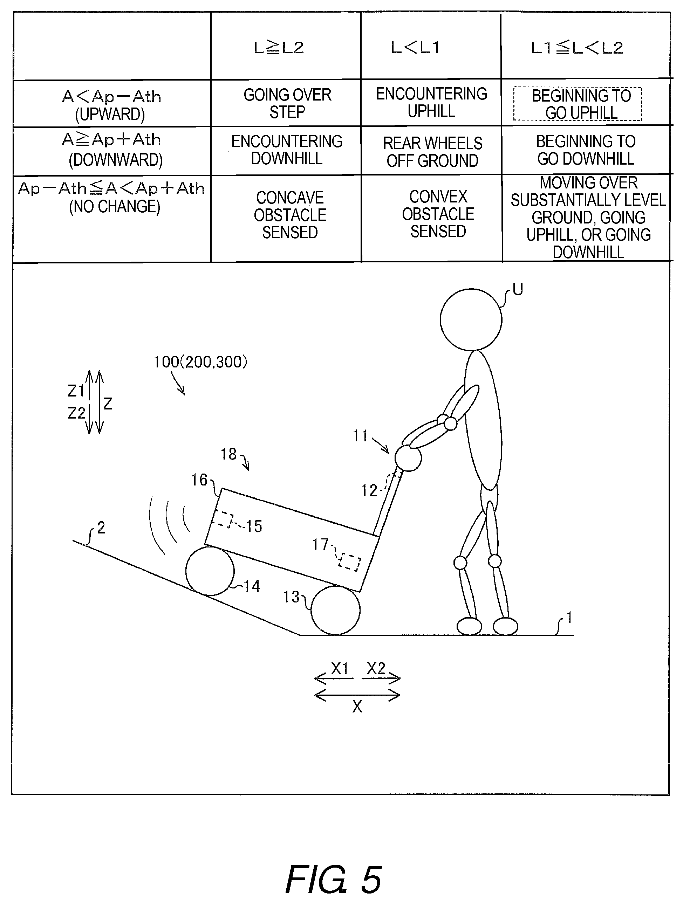

As shown in FIG. 5, a state in which the walking assistance moving vehicle 100 is beginning to move the uphill 2 will now be described. In this state of beginning to move the uphill 2, the walking assistance moving vehicle 100 is such that the drive wheels 13 provided at the rear (the X2 direction side) are touching the ground 1 directly in front of the first rise of the uphill 2, and the free wheels 14 at the front (the X1 direction side) are touching the uphill 2. In this case, the distance sensor 15 on the front side (the X1 direction side) of the walking assistance moving vehicle 100 senses the distance L that is about the same as when moving over the level ground (see FIG. 1). Specifically, when beginning to go uphill, the distance L is sensed that is at least at the lower limit distance threshold L1 and less than the upper limit distance threshold L2. In the case shown in FIG. 5, the inclination sensor 17 senses a change in the upward inclination of the walking assistance moving vehicle 100. The controller 24 determines that the walking assistance moving vehicle 100 is beginning to go uphill based on the sensing results of the various sensors mentioned above. When the state of beginning to go uphill is identified, the assist on mode in which the user U is assisted is selected by the controller 24 as the operating mode of the walking assistance moving vehicle 100 following the state of encountering the uphill 2. In this assist on mode, the control is performed to increase the assist force according to how far up the uphill 2 is (the extent of change in the inclination of the walking assistance moving vehicle 100). This state of beginning to go uphill is an example of the "first state in which the walking assistance moving vehicle moves on the sloped ground" of the present invention. Also, this state of beginning to go uphill is an example of the "transient state in which the walking assistance moving vehicle is beginning to move on the sloped ground" of the present invention.

As shown in FIG. 6, a state in which the walking assistance moving vehicle 100 encounters a downhill 3 will now be described. In the state of encountering the downhill 3, the walking assistance moving vehicle 100 is such that the drive wheels 13 at the rear (the X2 direction side) are touching the ground 1, and the free wheels 14 at the front (the X1 direction side) are touching the first drop of the downhill. In this state, the distance sensor 15 on the front side (the X1 direction side) of the walking assistance moving vehicle 100 senses the distance L that is farther away (to the X1 direction side) than when moving over the level ground (see FIG. 1). Therefore, when the downhill 3 is encountered, the distance L that is at least the upper limit distance threshold L2 is sensed. In a situation such as that shown in FIG. 6, the inclination sensor 17 senses a change in the downward inclination of the walking assistance moving vehicle 100. The controller 24 identifies the state in which the walking assistance moving vehicle 100 has encountered the downhill 3 based on the sensing results of the various sensors discussed above. If it is determined that the downhill 3 has been encountered, then the controller 24 switches the operating mode of the walking assistance moving vehicle 100 to the assist on mode in which the user U is assisted. In this assist on mode, the control is performed to brake the walking assistance moving vehicle 100 according to how far down the downhill 3 is (the extent of change in the inclination of the walking assistance moving vehicle 100). This state of encountering the downhill 3 is an example of the "first state in which the walking assistance moving vehicle moves on the sloped ground" of the present invention. Also, this state of encountering the downhill 3 is an example of the "transient state in which the walking assistance moving vehicle is beginning to move on the sloped ground" of the present invention.

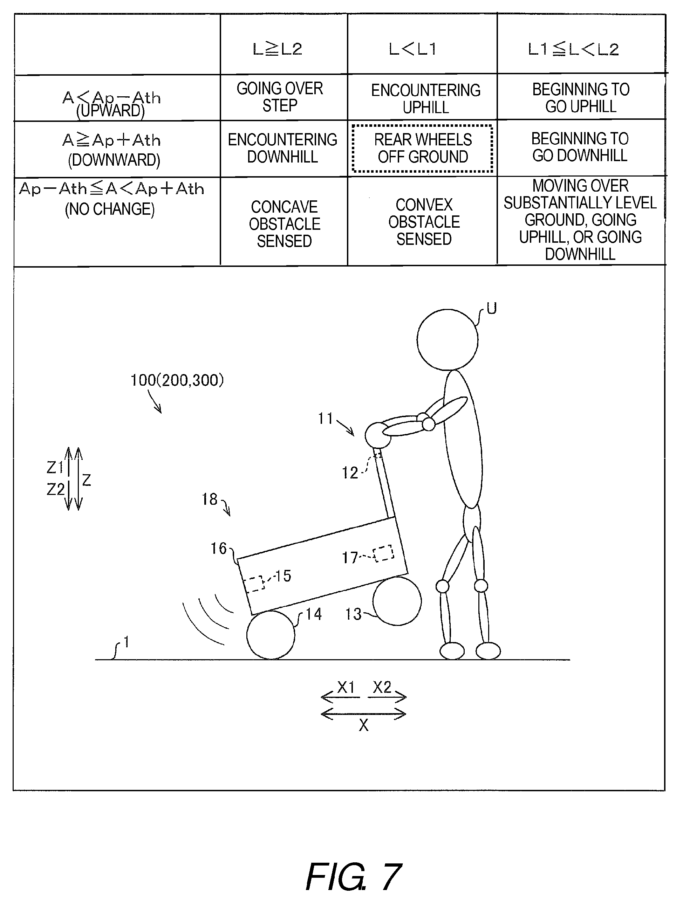

As shown in FIG. 7, a state in which the rear wheels of the walking assistance moving vehicle 100 are off the ground will now be described. With the rear wheels off the ground, the walking assistance moving vehicle 100 is such that the drive wheels 13 at the rear (the X2 direction side) are not touching the ground 1, and the free wheels 14 at the front (the X1 direction side) are touching the ground 1. In this case, the distance sensor 15 on the front side (the X1 direction side) of the walking assistance moving vehicle 100 senses the distance L that is closer (to the X2 direction side) than when moving over the level ground (see FIG. 1). Therefore, when the rear wheels are off the ground, the distance L that is less than the lower limit distance threshold L1 is sensed. As shown in FIG. 7, the inclination sensor 17 senses a change in the downward inclination of the walking assistance moving vehicle 100. The controller 24 identifies the state in which the rear wheels of the walking assistance moving vehicle 100 are off the ground based on the sensing results of the various sensors discussed above. If the state in which the rear wheels are off the ground, then the controller 24 switches the operating mode of the walking assistance moving vehicle 100 to the assist off mode in which the user U is not assisted. This state in which the rear wheels are off the ground is an example of the "second state in which at least one of the wheels is off the ground" of the present invention.

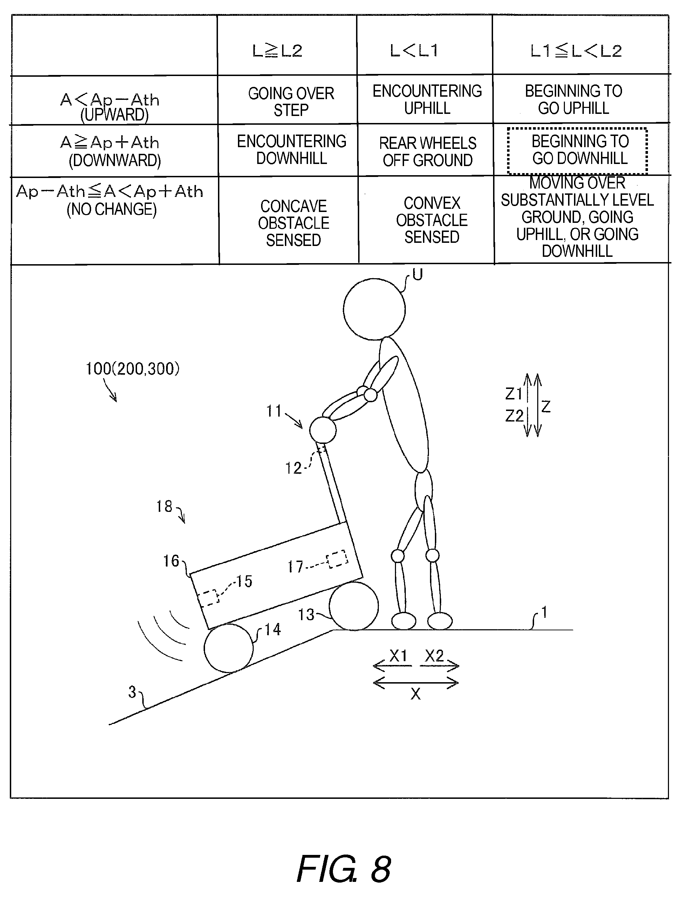

As shown in FIG. 8, a state in which the walking assistance moving vehicle 100 is beginning to move the downhill 3 will now be described. In this state of beginning to move the downhill 3, the walking assistance moving vehicle 100 is such that the drive wheels 13 provided at the rear (the X2 direction side) are touching the ground 1 directly in front of the first drop of the downhill 3, and the free wheels 14 at the front (the X1 direction side) are touching the downhill 3. In this case, the distance sensor 15 on the front side (the X1 direction side) of the walking assistance moving vehicle 100 senses the distance L that is about the same as when moving over the level ground (see FIG. 1). Specifically, when beginning to go downhill, the distance L is sensed that is at least at the lower limit distance threshold L1 and less than the upper limit distance threshold L2. In the case shown in FIG. 8, the inclination sensor 17 senses a change in the downward inclination of the walking assistance moving vehicle 100. The controller 24 determines that the walking assistance moving vehicle 100 is beginning to go downhill based on the sensing results of the various sensors mentioned above. When the state of beginning to go downhill is identified, the assist on mode in which the user U is assisted is selected by the controller 24 as the operating mode of the walking assistance moving vehicle 100 following the state of encountering the downhill 3. In assist on mode, the control is performed to brake the walking assistance moving vehicle 100 according to how far down the downhill 3 is (the extent of change in the inclination of the walking assistance moving vehicle 100). This state of beginning to go downhill is an example of the "first state in which the walking assistance moving vehicle moves on the sloped ground" of the present invention. Also, this state of beginning to go downhill is an example of the "transient state in which the walking assistance moving vehicle is beginning to move on the sloped ground" of the present invention.

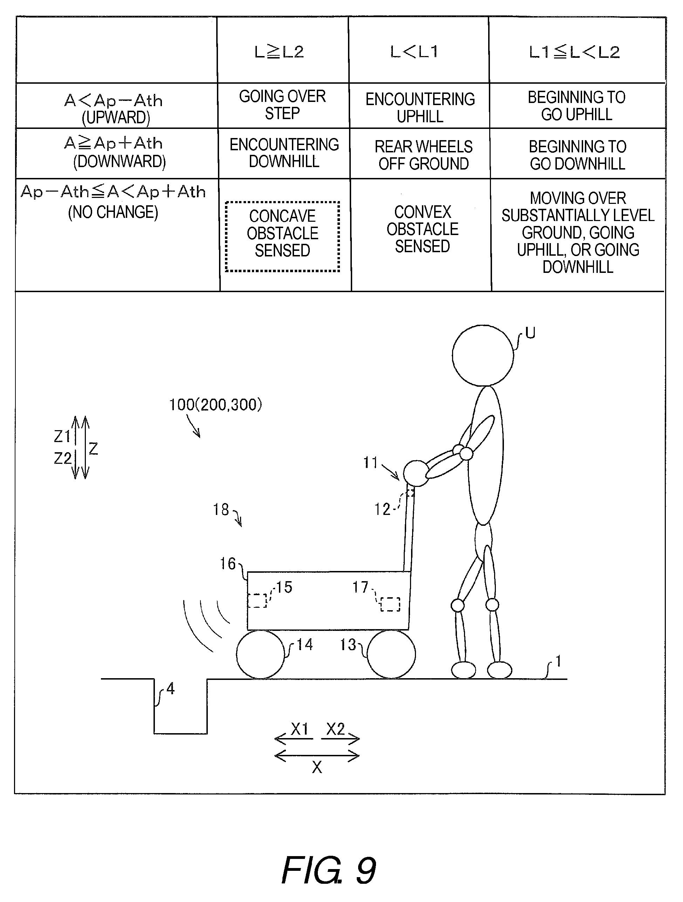

As shown in FIG. 9, a state in which the walking assistance moving vehicle 100 has detected a concave obstacle 4. the state in which the concave obstacle 4 has been detected is a state in which the walking assistance moving vehicle 100 is moving over level ground and there is the concave obstacle 4 ahead of (on the X1 direction side of) the walking assistance moving vehicle 100. In this case, the distance sensor 15 on the front side (the X1 direction side) of the walking assistance moving vehicle 100 senses the distance L that is farther away than in a state of moving over the level ground (see FIG. 1). Specifically, when the concave obstacle 4 has been detected, the distance L that is at least the upper limit distance threshold L2 is sensed. Also, in the situation shown in FIG. 9, the inclination sensor 17 senses that there is no change in the inclination of the walking assistance moving vehicle 100. The controller 24 identifies the state in which the walking assistance moving vehicle 100 is near the concave obstacle 4. When the concave obstacle has been detected, the controller 24 switches the operating mode of the walking assistance moving vehicle 100 to a stop mode in which the walking assistance moving vehicle 100 is stopped. In the stop mode, the control is performed to decelerate or brake the walking assistance moving vehicle 100 before reaching the concave obstacle 4. This state in which the concave obstacle 4 has been detected is an example of the "third state in which an obstacle is present ahead" of the present invention.

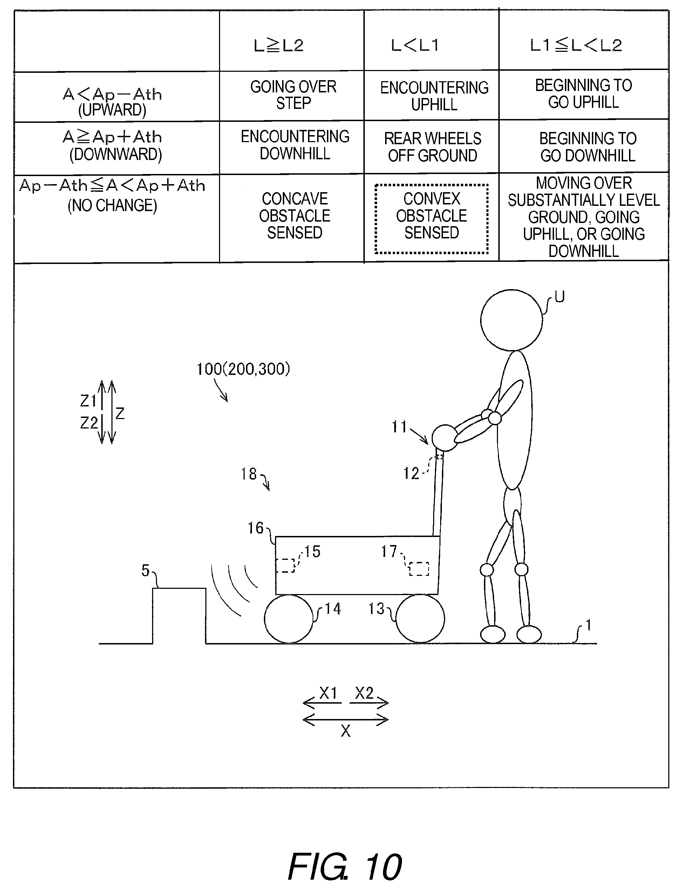

As shown in FIG. 10, a state in which the walking assistance moving vehicle 100 is near a convex obstacle 5 will be described. When the convex obstacle 5 has been detected, this is a state in which the walking assistance moving vehicle 100 is moving over level ground and the convex obstacle 5 is located ahead of (on the X1 direction side of) the walking assistance moving vehicle 100. In this case, the distance sensor 15 on the front side (the X1 direction side) of the walking assistance moving vehicle 100 senses the distance L that is further to the rear (to the X2 direction) than when moving over the flat ground (see FIG. 1). Specifically, when the convex obstacle 5 has been detected, the distance L that is less than the lower limit distance threshold L1 is sensed. In the situation shown in FIG. 10, the inclination sensor 17 senses that there is no change in the inclination of the walking assistance moving vehicle 100. The controller 24 identifies the state in which the walking assistance moving vehicle 100 is near the convex obstacle 5. When the convex obstacle 5 has been detected, the controller 24 switches the operating mode of the walking assistance moving vehicle 100 to the stop mode in which the walking assistance moving vehicle 100 is stopped. In the stop mode, the control is performed to decelerate or brake the walking assistance moving vehicle 100 before reaching the convex obstacle 5. This state in which the concave obstacle 5 has been detected is an example of the "third state in which an obstacle is present ahead" of the present invention.

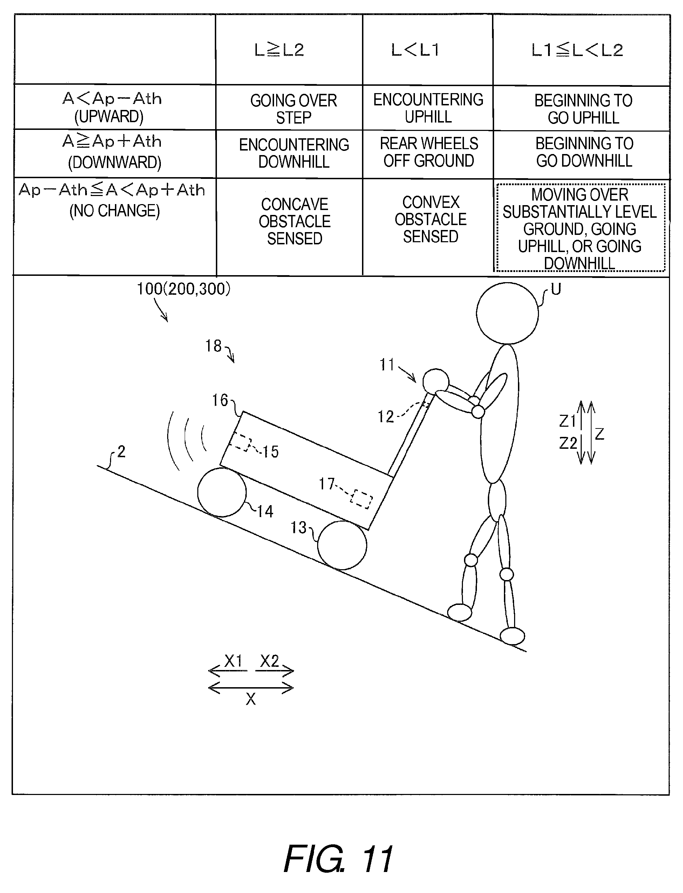

As shown in FIG. 11, a state in which the walking assistance moving vehicle 100 is moving over a substantially flat uphill 2 will now be described. In this case, the distance sensor 15 on the front side (the X1 direction side) of the walking assistance moving vehicle 100 senses the distance L that is substantially the same as when moving over the level ground (see FIG. 1). Specifically, when moving over the substantially flat uphill 2, the distance L is sensed that is at least the lower limit distance threshold L1 and is less than the upper limit distance threshold L2. In the situation shown in FIG. 11, the inclination sensor 17 senses that there is no change in the inclination of the walking assistance moving vehicle 100. When there is no change in inclination, the inclination sensor 17 senses how much inclination there is with respect to the state of moving over the level ground. The controller 24 identifies the state in which the walking assistance moving vehicle 100 is moving over the substantially flat uphill 2 based on the sensing results of the various sensors discussed above. If the state of moving over the substantially flat uphill 2 has been identified, then the assist on mode in which the user U is assisted is selected by the controller 24 as the operating mode of the walking assistance moving vehicle 100 following the state of beginning to go uphill. In the assist on mode control is performed to increase the assist force. This state of moving over the substantially flat uphill 2 is an example of the "first state in which the walking assistance moving vehicle moves on the sloped ground" of the present invention. Also, this state of moving over the substantially flat uphill 2 is an example of the "traveling state in which the walking assistance moving vehicle is moving on the sloped ground" of the present invention.

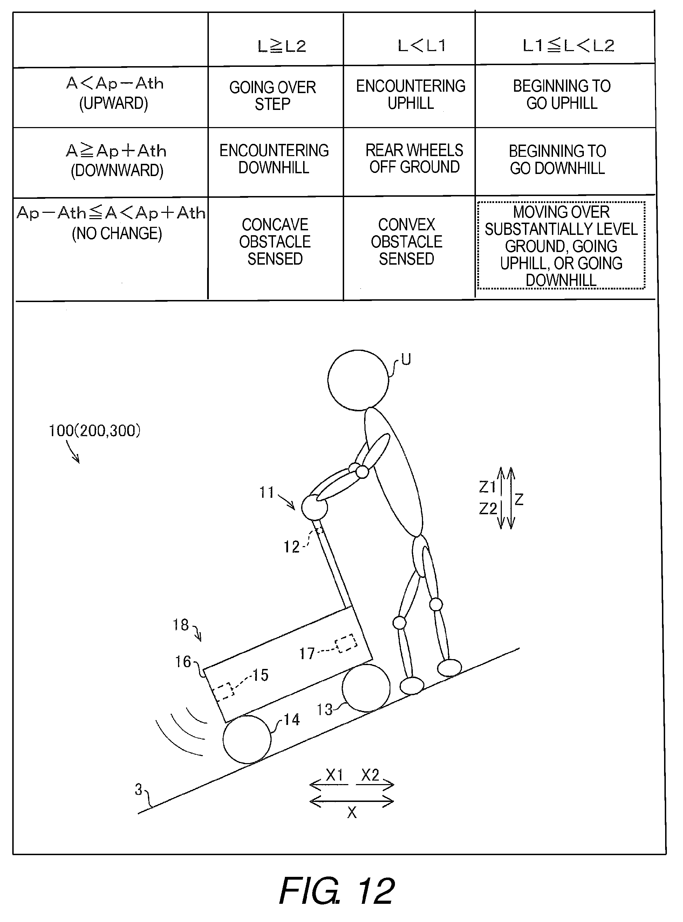

As shown in FIG. 12, a state in which the walking assistance moving vehicle 100 moves over a substantially flat downhill 3 will now be described. In this case, the distance sensor 15 provided in front of (on the X1 direction side of the walking assistance moving vehicle 100) senses the distance L that is substantially the same as when moving over level ground (see FIG. 1). Specifically, when moving over the substantially flat downhill 3, the distance L is sensed that is at least the lower limit distance threshold L1 and is less than the upper limit distance threshold L2. In the situation shown in FIG. 12, the inclination sensor 17 senses that there is no change in the inclination of the walking assistance moving vehicle 100. If there is no change in inclination, the inclination sensor 17 senses how much inclination there is with respect to the state of moving over the level ground. The controller 24 identifies the state in which the walking assistance moving vehicle 100 is moving over the substantially flat downhill 3 based on the sensing results of the various sensors discussed above. If the state of moving over the substantially flat downhill 3 has been identified, then the assist on mode in which the user U is assisted is selected by the controller 24 as the operating mode of the walking assistance moving vehicle 100 following the state of beginning to go downhill. In the assist on mode, the control is performed to brake the walking assistance moving vehicle 100. This state of moving over the substantially flat downhill 3 is an example of the "first state in which the walking assistance moving vehicle moves on the sloped ground" of the present invention. Also, this state of moving on the substantially flat downhill 3 is an example of the "traveling state in which the walking assistance moving vehicle is moving on the sloped ground" of the present invention.

The processing for determining the operating mode of the walking assistance moving vehicle 100 will now be described through reference to FIGS. 1 to 13.

First, in step S101, the most recent acceleration Ap sensed by the inclination sensor 17 (see FIG. 2) is cleared (Ap = 0) by the controller 24 (see FIG. 2). Then, in step S102, the controller 24 acquires the value of the current acceleration A sensed by the inclination sensor 17. In step S103, the controller 24 acquires the distance L sensed by the distance sensor 15 (see FIG. 2).

In step S104, the controller 24 compares the most recent acceleration Ap with the current acceleration A. More specifically, in step S104, the controller 24 determines the change in inclination by comparing the current acceleration A, the most recently sensed acceleration Ap, and the acceleration threshold Ath.

If it is determined that the inclination has undergone an upward change, then in step S105, the controller 24 compares the distance L with the distance threshold L2. If the distance L is at least the distance threshold L2, then in step S106, the controller 24 sets the operating mode of the walking assistance moving vehicle 100 to the assist off mode. In step S106, the state of the walking assistance moving vehicle 100 is determined to be the state of going over the step 6, as shown in FIG. 3. In step S105, if the distance L is less than the distance threshold L2, then in step S107, the controller 24 sets the operating mode of the walking assistance moving vehicle 100 to the assist on mode. In step S107, the state of the walking assistance moving vehicle 100 is determined to be the state over encountering the uphill 2 or the state of beginning to move the uphill 2, as shown in FIG. 4 or 5.

In step S104, if the inclination is determined to have undergone a downward change, then in step S108, the controller 24 compares the distance L with the distance threshold L1. If the distance L is less than the distance threshold L1, then in step S109, the controller 24 sets the operating mode of the walking assistance moving vehicle 100 to the assist off mode. In step S109, the state of the walking assistance moving vehicle 100 is determined to be one in which the rear wheels are off the ground, as shown in FIG. 7. In step S108, if the distance L is at least the distance threshold L1, then in step S110, the controller 24 sets the operating mode of the walking assistance moving vehicle 100 to the assist on mode. In step S110, the state of the walking assistance moving vehicle 100 is determined to be the state of encountering the downhill 3, or the state of beginning to go downhill, as shown in FIG. 6 or 8.

If it is determined in step S104 that there is no change in inclination, then in step S111, the controller 24 compares the distance L with the distance threshold L1 and the distance threshold L2. If the distance L is less than the distance threshold L1, in step S112, the controller 24 sets the operating mode of the walking assistance moving vehicle 100 to the stop mode. In step S 112, the state of the walking assistance moving vehicle 100 is determined to be the state in which the convex obstacle 5 has been detected, as shown in FIG. 10. In step S111, if the distance L is at least the distance threshold L2, then in step S113, the controller 24 sets the operating mode of the walking assistance moving vehicle 100 to the stop mode. In step S113, the state of the walking assistance moving vehicle 100 is determined to be the state in which the concave obstacle 4 has been detected, as shown in FIG. 9. In step S111, if the distance L is at least the distance threshold L1 and is less than the distance threshold L2, then in step S 114, the controller 24 sets the operating mode of the walking assistance moving vehicle 100 to the assist on mode. In step S114, the state of the walking assistance moving vehicle 100 is determined to be the state of moving over the level ground, the state of moving over the substantially flat uphill 2, or the state of moving over the substantially flat downhill 3, as shown in FIG. 1, 11, or 12. In this case, the control is performed to increase the assist force or to brake, according to the state identified by the controller 24.

After the operating mode of the walking assistance moving vehicle 100 has been set in step S106, S107, S109, S110, S112, S113, or S114, the current acceleration A is set as the most recent acceleration Ap in step S115. Then, in step S116, after waiting for 1 ms (millisecond), the controller 24 repeats this operating mode determination processing again from step S102.

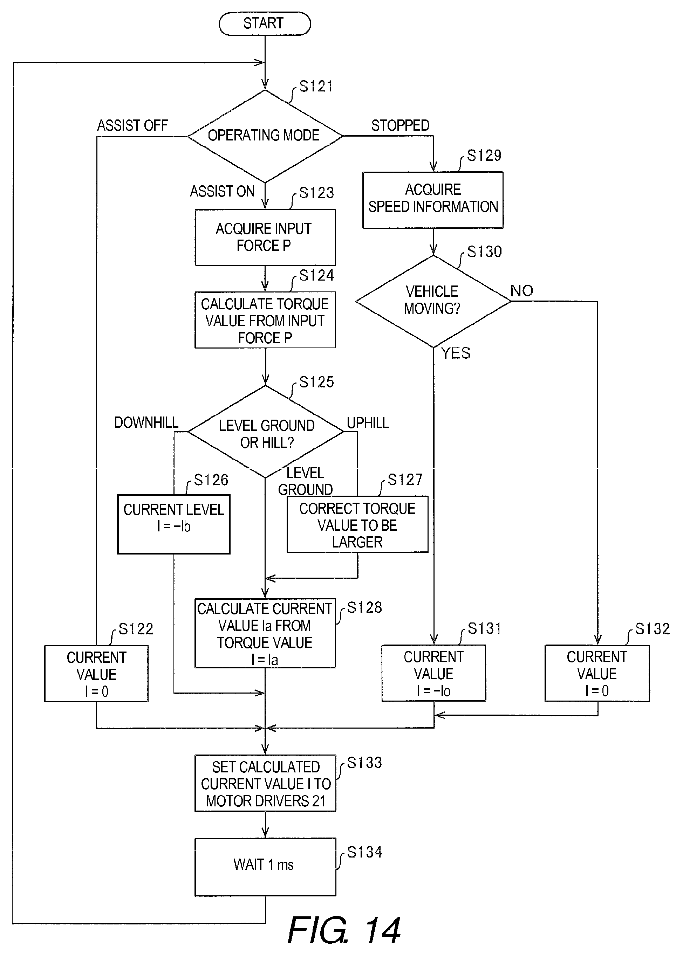

Next, the processing for executing the operating mode set in FIG. 13 will now be described through reference to FIGS. 2 and 14.

First, in step S121, the controller 24 determines which of the operating modes has been set (see FIG. 2).

If the assist off mode has been set as the operating mode, then in step S122, the controller 24 selects I = 0 as the current value I set at the motor drivers 21 (see FIG. 2).

In step S121, if the operating mode has been set to the assist on mode, then in step S123, the controller 24 acquires the input force P exerted by the user U and sensed by the pressure sensor 12 (see FIG. 2). In step S124, the controller 24 calculates a torque value corresponding to the magnitude of the input force P. In step S125, the controller 24 determines whether the walking assistance moving vehicle 100 is moving over the level ground, the uphill 2, or the downhill 3 based on information about the inclination sensed by the inclination sensor 17 (see FIG. 2).

If the vehicle is determined to be moving over the downhill 3, then in step S126, the controller 24 selects I = -Ib as the current value I set at the motor drivers 21. - Ib here is the current value for generating a braking force to brake the walking assistance moving vehicle 100.

In step S125, if the vehicle is determined to be moving over the uphill 2, then in step S127, the torque value calculated in step S124 is corrected to be larger, and the flow proceeds to step S128. In step S125, if the vehicle is determined to be moving over the level ground, the flow proceeds directly to step S127. In step S127, the controller 24 calculates a current value Ia from the calculated torque value. The controller 24 then selects I = Ia as the current value I set at the motor drivers 21.

In step S121, if the operating mode is set to the stop mode, then in step S129, the controller 24 acquires information about the speed sensed by the rotational angle sensors 23 (see FIG. 2). In step S130, the controller 24 determines whether or not the walking assistance moving vehicle 100 is currently moving based on the acquired speed information. If it is moving, in step S131, the controller 24 sets I = -Io as the current value I set at the motor drivers 21. The current value -Io here is the current value needed to generate a braking force for decelerating or stopping the walking assistance moving vehicle 100. If the vehicle is not moving in step S130, then in step S132, the controller 24 sets I = 0 as the current value I set at the motor drivers 21.

After the current value I to be set at the motor drivers 21 is set in step S122, S126, S128, S 131, or S 132, the controller 24 sets the selected current value I at the motor drivers 21 in step S133. The motor drivers 21 then drive the drive motors 20 at the specified current value. This allows the operation of the walking assistance moving vehicle to be controlled by the controller 24 according to the state of the walking assistance moving vehicle 100.

After the current value I has been set at the motor drivers 21, in step S134, the system waits 1 ms (millisecond), after which the controller 24 repeats this operating mode determination processing again from step S121. This is how the walking assistance moving vehicle 100 in accordance with this first embodiment is configured.

The following effects can be obtained in the first embodiment.

As discussed above, in the first embodiment, the controller 24 distinguishes between the state of moving over the sloped ground (the state of encountering the uphill 2, the state of beginning to go uphill, and the state of moving over the substantially flat uphill 2) and the state in which the wheels (the drive wheels 13 or the free wheels 14) are off the ground (the state of going over the step 6 or the state in which the rear wheels are off the ground), based on the distance L sensed by the distance sensor 15 and the inclination sensed by the inclination sensor 17. The controller 24 performs operational control over the walking assistance moving vehicle main body 18 (the walking assistance moving vehicle 100). This allows the state in which the walking assistance moving vehicle main body 18 is moving over the sloped ground and the state in which the wheels are off the ground to be ascertained. Thus, the state in which the vehicle is moving over the sloped ground is identified in addition to the state in which the wheels are not touching the ground, regardless of a change in the ground. Therefore, the proper control (such as switching between the assist on mode and the assist off mode) can be performed by the controller 24 according to the identified state.

Also, as discussed above, in the first embodiment, the controller 24 acquires the amount of change in inclination sensed by the inclination sensor 17. The controller 24 distinguishes between the transient state of beginning to move over the sloped ground (e.g., the state of encountering the uphill 2 or the state of beginning to go uphill) and the state of moving over the sloped ground (e.g., the state of moving over the substantially flat uphill 2) based on the acquired amount of change in inclination. The controller 24 performs operational control over the walking assistance moving vehicle main body 18 according to the identified state. Consequently, in the state in which the vehicle is moving over the sloped ground, the transient state can be distinguished from the state of moving over the sloped ground. Thus, the assist force produced by the walking assistance moving vehicle 100 can be precisely controlled, such as gradually increasing the assist force from the transient state, according to the state of moving over the sloped ground. This makes the walking assistance moving vehicle main body 18 more convenient for the user U to use when moving over the sloped ground.

Also, as discussed above, in the first embodiment, the controller 24 distinguishes between the state of moving over the sloped ground, the state in which the wheels are off the ground, and the state in which there is an obstacle ahead (the state in which the concave obstacle 4 has been detected or the state in which the convex obstacle 5 has been detected)), based on the distance L sensed by the distance sensor 15 and the inclination sensed by the inclination sensor 17. The controller 24 performs operational control over the walking assistance moving vehicle main body 18 according to the result of distinguishing between the state of moving over the sloped ground, the state in which the wheels are off the ground, and the state in which there is an obstacle ahead. This means that not only the state of moving over the sloped ground and the state in which the wheels are off the ground, but also the state in which there is an obstacle ahead can be determined. Thus, the controller 24 can perform more accurate control according to the state of the walking assistance moving vehicle main body 18 thus identified.

Also, as discussed above, in the first embodiment, the controller 24 determines the state of the walking assistance moving vehicle main body 18. The controller 24 also performs operational control over the walking assistance moving vehicle main body 18 such that in the state of moving over the sloped ground, the assist on mode is set and the user U is assisted, in the state in which the wheels are off the ground, the assist off mode is set and the user U is not assisted, and in the state in which there is an obstacle ahead, the stop mode is set and the walking assistance moving vehicle main body 18 is stopped. Consequently, the walking assistance moving vehicle main body 18 will be easier to operate since the proper control can be performed according to the state of the walking assistance moving vehicle main body 18.

Also, as discussed above, in the first embodiment, when the state of going uphill (the state of encountering the uphill 2, the state of beginning to go uphill, or the state of moving over the substantially flat uphill 2) is identified based on the distance L sensed by the distance sensor 15 and the inclination sensed by the inclination sensor 17, the controller 24 increases the assist force produced by the drive wheels 13 in the assist on mode. Consequently, when going uphill, the user U can be assisted with a stronger force than when moving over the level ground, which makes the walking assistance moving vehicle main body 18 more convenient to operate.

Also, as discussed above, in the first embodiment, when the state of going downhill (the state of encountering the downhill 3, the state of beginning to go downhill, or the state of moving over the substantially flat downhill 3) is identified based on the distance L sensed by the distance sensor 15 and the inclination sensed by the inclination sensor 17, the controller 24 brakes the drive wheels 13 of the walking assistance moving vehicle main body 18 in the assist on mode. Consequently, when going downhill, the walking assistance moving vehicle main body 18 can be kept from moving at too high a speed, which makes the walking assistance moving vehicle main body 18 more convenient to operate.

Also, as discussed above, in the first embodiment, the acceleration sensor is used as the inclination sensor 17. Therefore, the inclination of the walking assistance moving vehicle main body 18 can be accurately sensed, so an accurately sensed value can be used to accurately ascertain the state of the walking assistance moving vehicle main body 18.

### SECOND EMBODIMENT

Referring now to FIGS. 2, 3 and 15, a walking assistance moving vehicle 200 in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity. In this second embodiment, unlike in the first embodiment above in which the assist on mode is set when going over the step 6, a step crossing mode for going over the step 6 is further provided in addition to the assist on mode, the assist off mode, and the stop mode as the operating mode of the walking assistance moving vehicle 200. This step crossing mode is an example of the "rearward assist off mode" of the present invention.

The processing for the walking assistance moving vehicle 200 (see FIG. 2) to go over the step 6 will be described through reference to FIGS. 2, 3, and 15. The step crossing processing referred to here is operational processing for the walking assistance moving vehicle 200 to go over the step 6 when the user U is approaching the step 6 (see FIG. 3) and raises the free wheels 14 (see FIG. 3) off the ground 1 (see FIG. 3).

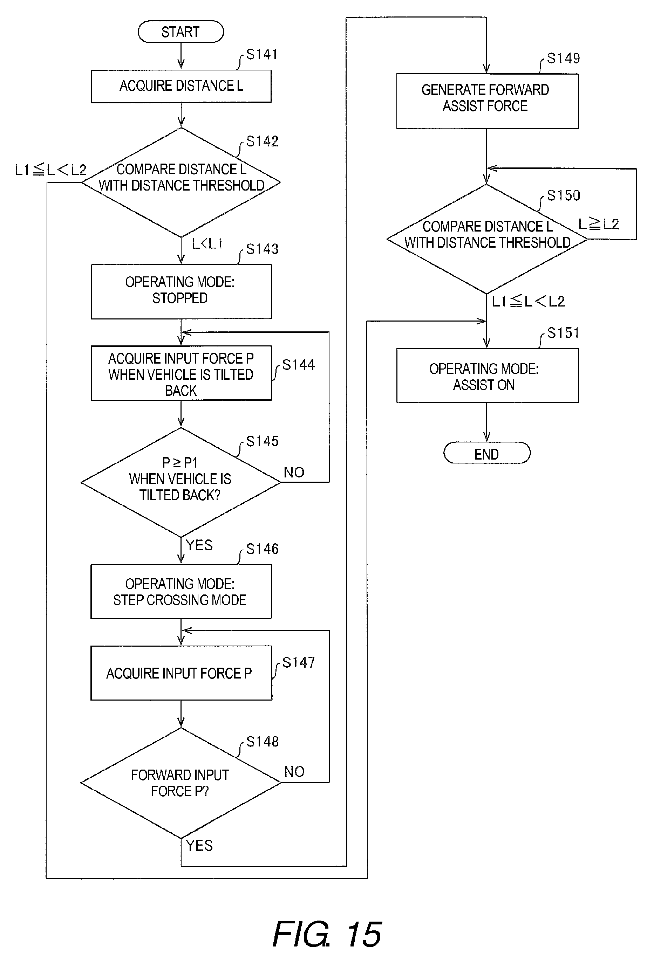

With the second embodiment, as shown in FIG. 15, in step S141, information about the distance L between the walking assistance moving vehicle 200 and the step 6 (see FIG. 3) sensed by the distance sensor 15 (see FIG. 2) is acquired by the controller 24 (see FIG. 2). In step S142, the controller 24 compares the distance L with the distance threshold L1 and the distance threshold L2. If the distance L is at least the distance threshold L1 and less than the distance threshold L2, then it is determined that the distance L between the step 6 and the walking assistance moving vehicle 200 is such that the two are not close enough to each other. Thus, in step S151, the controller 24 sets the operating mode of the walking assistance moving vehicle 200 to the assist on mode.

In step S142, if the distance L is less than the distance threshold L1, then the distance L is determined to be such that the step 6 and the walking assistance moving vehicle 200 are sufficiently close to each other. Thus, in step S143, the controller 24 sets the operating mode of the walking assistance moving vehicle 200 to the stop mode. In the stop mode, the walking assistance moving vehicle 200 is decelerated and stopped. After this, in the stop mode of the walking assistance moving vehicle 200, the user U lifts up the free wheels 14 (see FIG. 3) provided at the front (on the X1 direction side), with the drive wheels 13 (see FIG. 3) provided at the rear (on the X2 direction side) as the fulcrum, in order to go over the step 6. Specifically, the user U tilts the walking assistance moving vehicle 200 to the rear (the X2 direction side; the user U side), with the drive wheels 13 as the fulcrum. Then, in step S 144, the controller 24 acquires the input force P produced by the tilting by the user U and sensed by the pressure sensor 12 (see FIG. 2). Then, in step S145, the controller 24 determines whether or not the input force P produced by the tilting by the user U is at least a threshold P1 of the input force. This threshold P1 of the input force here is a value used to determine whether or not the rearward input force P is the result of intentional tilting by the user U.

If the input force P is less than the threshold P1 of the input force, then the flow returns to step S144, and processing to acquire the input force P is repeated. If the input force P is at least the threshold P1, then in step S146, the controller 24 sets the operating mode of the walking assistance moving vehicle 200 to a step crossing mode. In the step crossing mode, the walking assistance moving vehicle 200 assists the waling of the user U in a direction other than rearward. Specifically, in step S147, the controller 24 acquires the input force P sensed by the pressure sensor 12, and in step S148, if the acquired input force P is a forward (to the X1 direction side; the direction of the step 6) input force, then in step S149, the controller 24 executes assist operation to assist the forward walking of the user U in order to go over the step 6. Also, in step S148, if the acquired input force P is not a forward input force, then the flow returns to step S147, and processing to acquire the input force P is repeated.

After the forward walking of the user U has been assisted, in step S150, the controller 24 again compares the distance L with the distance threshold L1 and the distance threshold L2. If the distance L is at least the distance threshold L2, then it is determined that the vehicle is in the midst of going over the step 6. Thus, the processing of step S150 is repeated. Also, in step S150, if the distance L is at least the distance threshold L1 and less than the distance threshold L2, then it is determined that the vehicle has gone over the step 6 (a state in which the walking assistance moving vehicle 200 is resting on the step 6). Thus, in step S151, the controller 24 sets the operating mode of the walking assistance moving vehicle 200 to the assist on mode.

The rest of the configuration in the second embodiment is the same as in the first embodiment above.

The following effect can be obtained with the second embodiment.

In the second embodiment, as discussed above, after the walking assistance moving vehicle main body 18 (the walking assistance moving vehicle 200) has been decelerated and stopped by the stop mode, if the pressure sensor 12 senses the rearward input force P of at least the threshold P1 of the input force, then the controller 24 performs operational control over the drive wheels 13 of the walking assistance moving vehicle main body 18 in the step crossing mode, in which the rearward walking of the user U is not assisted. Consequently, since there is no assist to the rearward walking of the user U such as when the step 6 or the like is ahead and is approached, and the walking assistance moving vehicle main body 18 is tilted back to go over the step 6, this prevents assist in a direction that the user U does not need (rearward). Therefore, the user U can more comfortably operate the walking assistance moving vehicle main body 18.

The rest of the effect of the second embodiment is the same as in the first embodiment above.

### THIRD EMBODIMENT

Referring now to FIGS. 2, 3 and 16, a walking assistance moving vehicle 300 in accordance with a third embodiment will now be explained. In view of the similarity between the first to third embodiments, the parts of the third embodiment that are identical to the parts of the first and second embodiments will be given the same reference numerals as the parts of the first and second embodiments. Moreover, the descriptions of the parts of the third embodiment that are identical to the parts of the first and second embodiments may be omitted for the sake of brevity. In this third embodiment, unlike in the second embodiment above, the drive wheels 13 (see FIG. 3) are locked (prevented from rotating) when the rearward input force P in step crossing processing is at least the threshold P1 of the input force.

Referring to FIGS. 2, 3, and 16, the step crossing processing for the walking assistance moving vehicle 300 (see FIG. 2) in accordance with the third embodiment will be explained. The processing that is the same as in the second embodiment shown in FIG. 15 will be numbered the same and not described again.

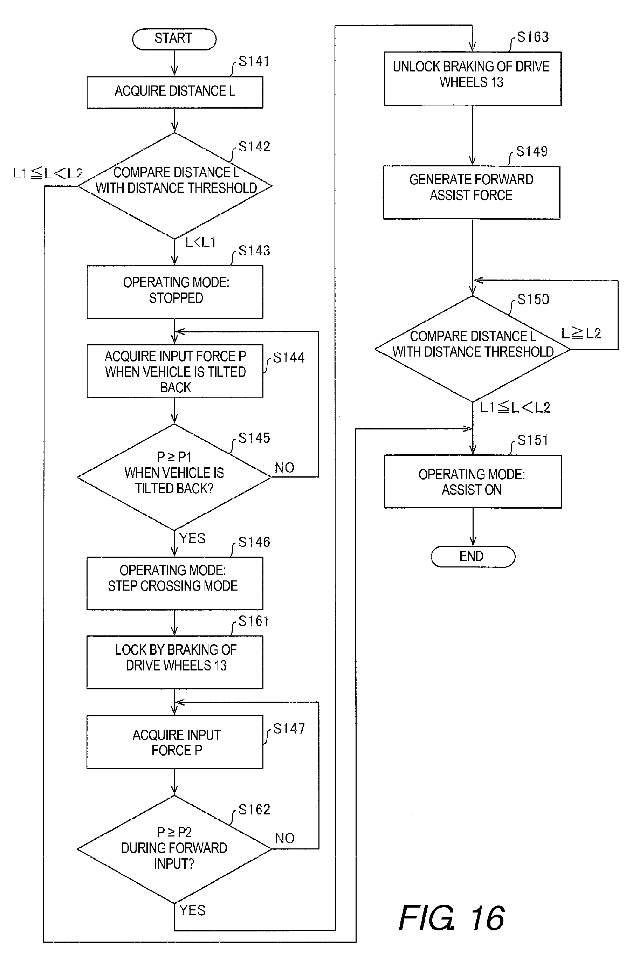

As shown in FIG. 16, in the third embodiment, in step S145, if the input force P during the tilting of the walking assistance moving vehicle 300 is at least the threshold P1 of the input force, then in step S146, the controller 24 sets the operating mode of the walking assistance moving vehicle 300 to the step crossing mode. Then, in step S161, the controller 24 (see FIG. 2) sets a specific current value at the motor drivers 21 (see FIG. 2) so that the drive wheels 13 (see FIG. 3) will be locked via the drive motors 20 (see FIG. 2). Then, in step S147, the controller 24 acquires the input force P sensed by the pressure sensor 12 (see FIG. 2).

In step S162, if the acquired input force P is a forward input force (to the X1 direction side) and is at least a threshold P2 of the input force, then in step S163, the controller 24 unlocks the drive wheels 13. The threshold P2 of the input force here is a value used to determine whether or not to unlock the drive wheels 13.

In step S162, if the acquired input force P is an input force other than forward, or if it is less than the threshold P2 of the input force, then the flow returns to step S147, and processing to acquire the input force P is repeated. The subsequent processing is carried out in the same manner as in steps S149 to S151 in FIG. 15.

The rest of the configuration in the third embodiment is the same as in the second embodiment above.

The following effect can be obtained with the third embodiment.

In the third embodiment, when the walking assistance moving vehicle main body 18 (the walking assistance moving vehicle 300) is operated in the step crossing mode, the controller 24 performs control not to assist the rearward walking of the user U, and to limit the rearward movement of the walking assistance moving vehicle main body 18 by locking the drive wheels 13. Since the rearward movement of the walking assistance moving vehicle main body 18 is thus limited, the user U can more forward more easily.

The rest of the effect of the third embodiment is the same as in the second embodiment above.

The embodiments disclosed herein are just examples in every respect, and should not be interpreted as being limiting in nature. The scope of the invention being indicated by the appended claims rather than by the above description of the embodiments, all modifications within the meaning and range of equivalency of the claims are included.

For example, in the first to third embodiments above, the state of the walking assistance moving vehicle 100 (200, 300) is identified by the controller 24 based on the distance L sensed by the distance sensor 15, the inclination sensed by the inclination sensor 17, and the amount of change in the inclination. However, the present invention is not limited to this. With the present invention, the state of the walking assistance moving vehicle 100 (200, 300) may be determined based on just the distance sensed by the distance sensor 15 and the inclination sensed by the inclination sensor 17.

Also, in the first to third embodiments above, the walking assistance moving vehicle 100 (200, 300) has the distance thresholds L1 and L2, but the present invention is not limited to this. With the present invention, the walking assistance moving vehicle 100 (200, 300) may instead have a distance threshold other than the distance thresholds L1 and L2. For example, the state in which the obstacle is ahead may be determined from the distance thresholds L1 and L2, and the state in which the vehicle is moving over the sloped ground and the state in which the wheels (the drive wheels 13 and the free wheels 14) are off the ground may be determined from the distance threshold other than the distance thresholds L1 and L2. This configuration makes the walking assistance moving vehicle easier for the user U to use.

Also, in the first to third embodiments above, the operational control to brake the walking assistance moving vehicle 100 (200, 300) is performed on the downhill 3, but the present invention is not limited to this. With the present invention, the operational control other than braking the walking assistance moving vehicle 100 (200, 300) may be performed on the downhill 3. For example, the operational control may be performed so that the walking assistance moving vehicle 100 (200, 300) is set to the assist off mode and the user U is not assisted on the downhill 3.

Also, in the first to third embodiments above, the operational control is performed to increase the assist force on the uphill 2, but the present invention is not limited to this. With the present invention, the configuration may be such that the assist force corresponding to the input force P of the user U is generated, just as on the level ground, without increasing the assist force.

Also, in the first to third embodiments above, the walking assistance moving vehicle 100 (200, 300) is decelerated and stopped, but the present invention is not limited to this. With the present invention, the walking assistance moving vehicle 100 (200, 300) may be stopped without performing the deceleration operation.

Also, in the first to third embodiments above, the walking assistance moving vehicle 100 (200, 300) has the distance sensor 15, but the present invention is not limited to this. With the present invention, the configuration may be such that the walking assistance moving vehicle has a plurality of distance sensors. With this configuration, since a plurality of sets of distance information can be acquired by the plurality of distance sensors, the state of the walking assistance moving vehicle can be ascertained more accurately.

Also, in the first to third embodiments above, the inclination sensor 17 is used to sense inclination from acceleration, but the present invention is not limited to this. With the present invention, an inclination sensor that senses inclination from angular velocity may be used, or an inclination sensor that senses inclination based on information about both acceleration and angular velocity may be used.

Also, in the first to third embodiments above, the walking assistance moving vehicle 100 (200, 300) has a pair of drive wheels 13 and a pair of free wheels 14, but the present invention is not limited to this. With the present invention, as long as the walking assistance moving vehicle 100 (200, 300) is able to assist the user U so that stable walking is possible, any number of drive wheels and free wheels may be used. For example, the walking assistance moving vehicle may have just one drive wheel, or may have three or more. The walking assistance moving vehicle may also have just one free wheel, or may have three or more.

Also, in the first to third embodiments above, for the sake of convenience, a flow driven flowchart is used to describe the processing of the controller 24 of the present invention sequentially along a processing flow, but the present invention is not limited to this. With the present invention, the processing operation of the controller 24 may be accomplished by event driven processing in which processing is executed for each event. In this case, the processing may be completely event driven, or may be a combination of event driven and flow driven.

The walking assistance moving vehicle in accordance with one aspect of the present invention includes a walking assistance moving vehicle main body with wheels, a distance sensor, an inclination sensor, and a controller. The walking assistance moving vehicle main body is configured to assist walking of a user. The distance sensor is configured to sense distance between the walking assistance moving vehicle main body and an object ahead of the walking assistance moving vehicle main body. The inclination sensor is configured to sense inclination of the walking assistance moving vehicle main body. The controller is configured to distinguish between a first state in which the walking assistance moving vehicle moves on a sloped ground and a second state in which at least one of the wheels is off a ground based on the distance sensed by the distance sensor and the inclination sensed by the inclination sensor. The controller is further configured to control the walking assistance moving vehicle main body according to a result of distinguishing between the first state and the second state.

As discussed above, the walking assistance moving vehicle in accordance with one aspect of the present invention includes the controller that distinguishes between the first state in which the walking assistance moving vehicle moves on the sloped ground and the second state in which at least one of the wheels is off the ground based on the distance sensed by the distance sensor and the inclination sensed by the inclination sensor. The controller further controls the walking assistance moving vehicle main body according to the result of distinguishing between the first state and the second state. Consequently, the first state in which the walking assistance moving vehicle main body moves on the sloped ground and the second state in which at least one of the wheels is off the ground can be ascertained. Thus, regardless of a change in the ground, the state in which the walking assistance moving vehicle moves on the sloped ground is identified in addition to the state in which one of the wheels are not touching the ground, and suitable control can be performed, such as switching the assist on or off, according to which state is determined.

With the walking assistance moving vehicle in accordance with the above aspect, the controller is further configured to acquire a change amount in the inclination sensed by the inclination sensor. The controller is further configured to distinguish between a transient state in which the walking assistance moving vehicle is beginning to move on the sloped ground in the first state and a traveling state in which the walking assistance vehicle is moving on the sloped ground in the first state based on the change amount in the inclination. The controller is further configured to control the walking assistance moving vehicle main body according to a result of distinguish between the transient state and the traveling state. With this configuration, it is further possible to distinguish between the transient state and the traveling state in which the vehicle is moving on the sloped ground in the first state. Thus, more precise control can be performed, such as gradually increasing the assist force from the transient state according to a state of moving on the sloped ground. This makes the walking assistance moving vehicle main body more convenient for the user when moving over the sloped ground.

With the walking assistance moving vehicle in accordance with the above aspect, the controller is further configured to distinguish between the first state, the second state, and a third state in which an obstacle is ahead based on the distance sensed by the distance sensor and the inclination sensed by the inclination sensor. The controller is further configured to control the walking assistance moving vehicle main body according to a result of distinguishing between the first state, the second state, and the third state. With this configuration, it is possible to distinguish not only between the first state in which the walking assistance moving vehicle is determined to move on the sloped ground and the second state in which at least one of the wheels is off the ground, but also the third state in which the obstacle is ahead. Thus, more suitable control can be performed according to which of the first to third states is determined.

In this case, the controller is further configured to control the walking assistance moving vehicle main body such that the walking assistance moving vehicle main body is set to an assist on mode in which the user is assisted in the first state, set to an assist off mode in which the user is not assisted in the second state, and set to a stop mode in which the walking assistance moving vehicle main body is stopped in the third state. With this configuration, suitable control can be performed according to which of the first to third states of the walking assistance moving vehicle main body, which makes the walking assistance moving vehicle main body easier to operate.

With the above configuration in which the operating mode is determined based on the state of the walking assistance moving vehicle main body, the first state includes a state of moving uphill. The controller is further configured to increase the assist force produced by a drive wheel of the wheels in the assist on mode while the state of moving uphill is identified based on the inclination sensed by the inclination sensor and the distance by the distance sensor. With this configuration, when moving uphill, the user can be assisted with a greater force than when moving over the level ground, which makes the walking assistance moving vehicle main body easier to operate.

With the above configuration in which the operating mode is determined based on the state of the walking assistance moving vehicle main body, the first state includes a state of moving downhill. The controller is further configured to brake a drive wheel of the wheels in the assist on mode while the state of moving downhill is identified based on the inclination sensed by the inclination sensor and the distance sensed by the distance sensor. With this configuration, when moving downhill, it is less likely that the walking assistance moving vehicle will move too fast, which makes the walking assistance moving vehicle main body easier to operate.

With the above configuration in which the operating mode is determined based on the state of the walking assistance moving vehicle main body, the walking assistance moving vehicle further includes a pressure sensor configured to sense input force at which the user operates the walking assistance moving vehicle main body. The controller is further configured to control a drive wheel of the wheels of the walking assistance moving vehicle main body by switching from the stop mode in the third state to a rearward assist off mode in which rearward walking of the user is not assisted while a rearward input force with at least a specific level is sensed by the pressure sensor after setting the walking assistance moving vehicle main body to the stop mode. With this configuration, the rearward walking of the user is not assisted when, for example, the user is approaching a step or the like ahead and the walking assistance moving vehicle is tilted back in order to go over the step, which prevents assist in a direction (rearward) not needed by the user. This makes the walking assistance moving vehicle main body more comfortable for the user to operate.

In this case, the controller is further configured to limit rearward movement of the walking assistance moving vehicle main body and not to assist the rearward walking of the user while the walking assistance moving vehicle main body is set to the rearward assist off mode. With this configuration, since the rearward movement of the walking assistance moving vehicle main body is limited, the user can move forward more easily.

With the walking assistance moving vehicle in accordance with the above aspect, the inclination sensor includes at least one of an acceleration sensor and an angular velocity sensor. With this configuration, since the inclination of the walking assistance moving vehicle main body can be accurately sensed, this accurately sensed value can be used to accurately ascertain the state of the walking assistance moving vehicle main body.

With the present invention, as discussed above, a walking assistance moving vehicle is provided with which a state in which the vehicle moves over the sloped ground can be detected in addition to a state in which the wheels are off the ground, and the proper control can be performed according to the detected state.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of a walking assistance moving vehicle in an upright position. Accordingly, these directional terms, as utilized to describe the walking assistance moving vehicle should be interpreted relative to a walking assistance moving vehicle in an upright position on a horizontal surface. The terms "left" and "right" are used to indicate the "right" when referencing from the right side as viewed from the rear of the walking assistance moving vehicle, and the "left" when referencing from the left side as viewed from the rear of the walking assistance moving vehicle.

Also it will be understood that although the terms "first" and "second" may be used herein to describe various components these components should not be limited by these terms. These terms are only used to distinguish one component from another. Thus, for example, a first component discussed above could be termed a second component and vice-a-versa without departing from the teachings of the present invention. The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A walking assistance moving vehicle comprising:
a walking assistance moving vehicle main body with wheels, the walking assistance moving vehicle main body being configured to assist walking of a user;
a distance sensor configured to sense distance between the walking assistance moving vehicle main body and an object ahead of the walking assistance moving vehicle main body;
an inclination sensor configured to sense inclination of the walking assistance moving vehicle main body; and
a controller configured to distinguish between a first state in which the walking assistance moving vehicle moves on a sloped ground and a second state in which at least one of the wheels is off a ground based on the distance sensed by the distance sensor and the inclination sensed by the inclination sensor, the controller being further configured to control the walking assistance moving vehicle main body according to a result of distinguishing between the first state and the second state.

2. The walking assistance moving vehicle according to claim 1, wherein
the controller is further configured to acquire a change amount in the inclination sensed by the inclination sensor, the controller being further configured to distinguish between a transient state in which the walking assistance moving vehicle is beginning to move on the sloped ground in the first state and a traveling state in which the walking assistance moving vehicle is moving on the sloped ground in the first state based on the change amount in the inclination, the controller being further configured to control the walking assistance moving vehicle main body according to a result of distinguishing between the transient state and the traveling state.

3. The walking assistance moving vehicle according to claim 1 or 2, wherein
the controller is further configured to distinguish between the first state, the second state, and a third state in which an obstacle is present ahead based on the distance sensed by the distance sensor and the inclination sensed by the inclination sensor, the controller being further configured to control the walking assistance moving vehicle main body according to a result of distinguishing between the first state, the second state, and the third state.

4. The walking assistance moving vehicle according to claim 3, wherein
the controller is further configured to control the walking assistance moving vehicle main body such that the walking assistance moving vehicle main body is set to an assist on mode in which the user is assisted in the first state, set to an assist off mode in which the user is not assisted in the second state, and set to a stop mode in which the walking assistance moving vehicle main body is stopped in the third state.

5. The walking assistance moving vehicle according to claim 4, wherein
the first state includes a state of moving uphill, and
the controller is further configured to increase assist force produced by a drive wheel of the wheels in the assist on mode while the state of moving uphill is identified based on the inclination sensed by the inclination sensor and the distance sensed by the distance sensor.

6. The walking assistance moving vehicle according to claim 4 or 5, wherein
the first state includes a state of moving downhill, and
the controller is further configured to brake a drive wheel of the wheels in the assist on mode while the state of moving downhill is identified based on the inclination sensed by the inclination sensor and the distance sensed by the distance sensor.

7. The walking assistance moving vehicle according to any one of claims 4 to 6, further comprising
a pressure sensor configured to sense input force at which the user operates the walking assistance moving vehicle main body,
the controller being further configured to control a drive wheel of the wheels of the walking assistance moving vehicle main body by switching from the stop mode in the third state to a rearward assist off mode in which rearward walking of the user is not assisted while a rearward input force with at least a specific level is sensed by the pressure sensor after setting the walking assistance moving vehicle main body to the stop mode.

8. The walking assistance moving vehicle according to claim 7, wherein
the controller is further configured to limit rearward movement of the walking assistance moving vehicle main body and not to assist the rearward walking of the user while the walking assistance moving vehicle is set to the rearward assist off mode.

9. The walking assistance moving vehicle according to any one of claims 1 to 8, wherein
the inclination sensor includes at least one of an acceleration sensor and an angular velocity sensor.
